# EUROPEAN PATENT APPLICATION

(11) **EP 1 043 852 A2**
(43) Date of publication of application: **11.10.2000**
(21) Application number: 00107467.3
(22) Date of filing: 06.04.2000
(51) Int. Cl.: H04H 1/02, H04N 7/10

(54) **Method and system for transmitting programme information in a CATV system**

(30) Priority: 09.04.1999 JP 10239399
(71) Applicant: Pioneer Corporation, Meguro-ku, Tokyo (JP)
(72) Inventor: Hashimoto, Kazunori, Oomori Koujou, Pioneer Corp., Tokyo 143-8564 (JP)
(74) Representative: Popp, Eugen, Dr.

(57) **Abstract**

Disclosed is a program information transmitting method and system for a CATV system which cyclically transmit program information for predetermined days to terminals from a headend and can allow each viewer to quickly acquire desired program information. The program information transmitting method and system weight program information for predetermined days (e.g., a week) day by day in accordance with the degree of necessity for a viewer, and make the transmission cycle of program information of the day of reception that has the highest degree of necessity in the day-by-day weighted program information the shortest in the transmission cycles of those program information of all the days.

## Description

### BACKGROUND OF THE INVENTION

### FIELD OF THE INVENTION

The present invention relates to a method and system for transmitting program information to terminals in a CATV system.

### DESCRIPTION OF THE RELATED ART

Recently, cable television (CATV) broadcasting has become popular in accordance with the development of multimedia.

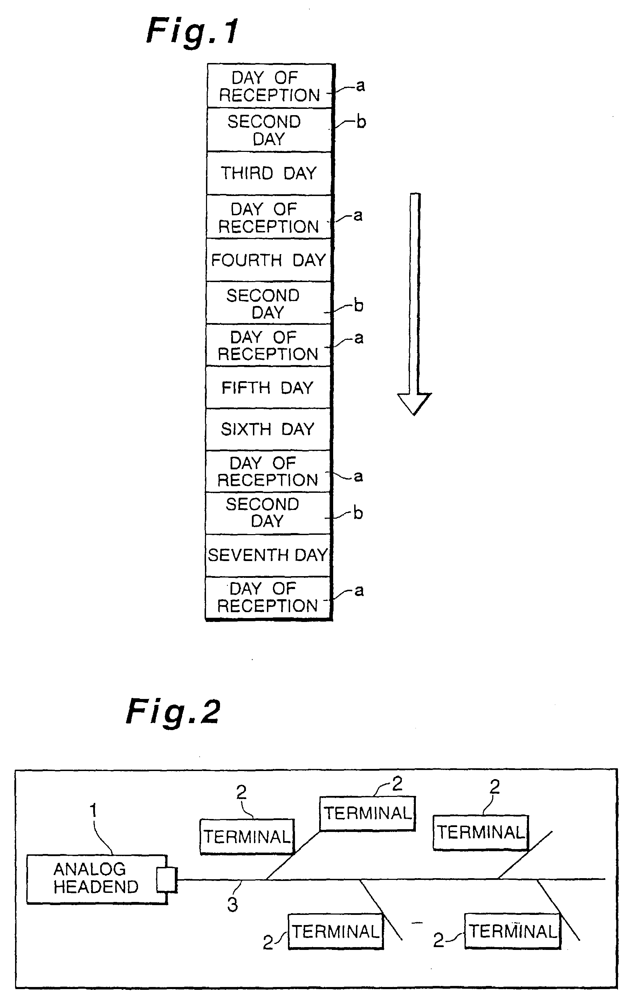

As shown in FIG. 2, a CATV system has a headend (control center) 1 sited in each area and connected to individual terminals 2 sited in subscribers' homes by cables 3. The headend 1 sends video signals to the individual terminals 2 over predetermined video frequency channels.

In such a CATV system, program information of each channel that is supplied from the headend 1 is sent to the individual terminals 2 so that each viewer can select a desired program while watching electronic program information or an electronic program guide (EPG) sent to the associated terminal 2.

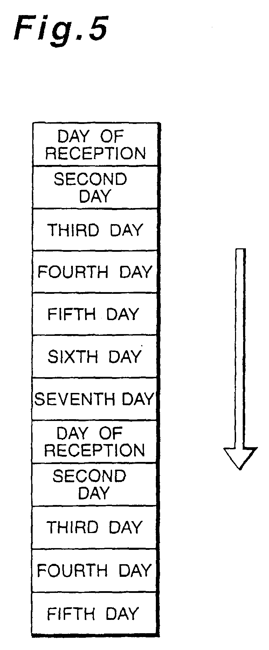

Conventionally, such an EPG is transmitted in such a way that, for example, data for a week is transmitted at a given period, as shown in FIG. 5.

Specifically, program information from information of the day of reception (first day or today) to information of the seventh day is transmitted in the order of date and this transmission is repeated when the transmission of the program information of the seventh day is completed.

According to the conventional program information transmitting method, when the CATV system has a narrow transmission band for data transmission, however, each terminal 2 takes a considerable time in acquiring program information for one week.

Unless each terminal 2 stores the transmitted program information, it is likely that a viewer misses a chance of watching program information of a desired date when program information of a different date is transmitted. In this case, the viewer should wait for the transmission of the program information of the desired date for a long period of time until the transmission cycle of program information for one week comes to the next cycle and the program information of the desired date is displayed.

There is a demand for a solution to this problem of the program information transmitting method for the conventional CATV system.

### SUMMARY OF THE INVENTION

Accordingly, it is an object of the present invention to provide a method and system for a CATV system, which can allow each viewer to quickly acquire program information the viewer wants.

To achieve the above object, according to the first aspect of this invention, there is provided a program information transmitting method for a CATV system for cyclically transmitting program information for predetermined days to terminals from a headend, comprising the steps of weighting the program information for the predetermined days day by day in accordance with a degree of necessity for a viewer; and making a transmission cycle of program information having a high degree of necessity in the day-by-day weighted program information shorter than transmission cycles of those program information of the other days.

To achieve the above object, according to the second aspect of this invention, there is provided a program information transmitting system for a CATV system for cyclically transmitting program information for predetermined days to terminals from a headend, comprising means for weighting the program information for the predetermined days day by day in accordance with a degree of necessity for a viewer; and means for making a transmission cycle of program information having a high degree of necessity in the day-by-day weighted program information shorter than transmission cycles of those program information of the other days.

According to the program information transmitting method and system of the first and second aspects of this invention, for example, program information for one week is cyclically transmitted to the individual terminals from the headend in the order of date.

The program information each viewer wants differs depending on the day. Therefore, the transmission order of day-by-day program information is set in such a way that program information for one week is weighted on the day-by-day basis in accordance with the degree of necessity and the transmission cycles of program information are made shorter in the order of a day having a higher degree of necessity to a day having a lower degree of necessity. This allows program information of the day which has a higher degree of necessity to be transmitted to the terminal more frequently.

According to the first and second aspects of this invention, therefore, each viewer can frequently acquire program information of the day of reception in the order from the day which has the highest degree of necessity to days having lower degrees of necessity. This can significantly shorten the time for acquiring the desired program information.

According to the program information transmitting method and system of the first and second aspects of this invention, the transmission cycles of the day-by-day program information may be shortened in the order of a day having a higher degree of necessity to a day having a lower degree of necessity.

In this case, in the case of transmitting program information for one week, for example, the program information of the day of reception whose degree of necessity is the highest for the viewer is inserted after program information for every three days, program information of the next date (second day or tomorrow) which has the next highest degree of necessity is inserted after program information for every four days (the program information of the day of reception has priority over that of the next date), and program information of the third day to the seventh day are sequentially and properly transmitted between such transmissions.

Therefore, the viewer can acquire program information of the day of reception according to the order of the highest-to-lowest degree of necessity in a short period of time.

According to the program information transmitting method and system of the first and second aspects of this invention, of the transmission cycles of the day-by-day program information, the transmission cycle of program information of the day of reception may be made shortest.

In this case, the program information of the day of reception which is considered the highest degree of necessity for a viewer is transmitted in the shortest cycle in the transmission cycles of all the program information.

This can allow the viewer to acquire the program information of the day of reception the viewer desires the most in the shortest time.

According to the program information transmitting method and system of the first and second aspects of this invention, of the transmission cycles of the day-by-day program information, the transmission cycle of program information of the next day to the day of reception may be made the second shortest to that of program information of the day of reception.

In this case, the program information of the second day which is considered the second highest degree of necessity for a viewer is transmitted next to the transmission cycle of the program information of the day of reception.

Therefore, the viewer can acquire the program information of the second day that the viewer desires next to the program information of the day of reception in a shorter time than program information of other days.

To achieve the above object, according to the third aspect of this invention, there is provided a program information transmitting method for a CATV system for transmitting program information for predetermined days to terminals from a headend, comprising the steps of inserting program information classified genre by genre between cyclically transmitted day-by-day program information in a shorter cycle than transmission cycles of the day-by-day program information.

To achieve the above object, according to the fourth aspect of this invention, there is provided a program information transmitting system for a CATV system for transmitting program information for predetermined days to terminals from a headend, comprising means for inserting program information classified genre by genre between cyclically transmitted day-by-day program information in a shorter cycle than transmission cycles of the day-by-day program information.

According to the program information transmitting method and system of the third and fourth aspects of this invention, at the time program information for one week, for example, is cyclically transmitted to the individual terminals from the headend in a predetermined order, program information of a predetermined genre is inserted and transmitted between transmissions of the program information of the individual dates in a shorter cycle than the transmission cycles of the program information of the individual dates.

For instance, program information which is a collection of only sports programs is inserted and transmitted between day-by-day program information of one week after program information for every two days or three days.

According to the third and fourth aspects of this invention, apparently, each viewer can frequently acquire program information of the most desired genre.

The viewer may be allowed to select only the desired one of the genre-by-genre program information which is transmitted in a short cycle on the associated terminal so that this desired program information alone is input to the terminal. This can further shorten the time for the acquisition of the desired program information.

### BRIEF DESCRIPTION OF THE DRAWINGS

FIG. 1 is an explanatory diagram exemplifying the transmission order of day-by-day program information according to one embodiment of this invention;
FIG. 2 is a structural diagram showing a CATV system;
FIG. 3 is a structural diagram showing a CATV system according to this embodiment of the invention;
FIG. 4 is a structural diagram depicting a terminal according to this embodiment of the invention; and
FIG. 5 is an explanatory diagram exemplifying the transmission order of day-by-day program information in a conventional CATV system.

### DETAILED DESCRIPTION OF THE PREFERRED EMBODIMENT

A preferred embodiment of the present invention will now be described with reference to the accompanying drawings.

FIG. 1 presents an explanatory diagram exemplifying a program information transmitting method for a CATV system according to one embodiment of this invention.

In FIG. 1, a headend cyclically transmits program information (EPG) for one week to the individual terminals in the associated area day by day.

The amount of program information each viewer wants is the largest on the day of reception and the degree of necessity of program information sequentially becomes smaller on the second day, the third day and so forth. In FIG. 1, therefore, the transmission order of program information is set in such a way that program information for one week is weighted on the day-by-day basis in accordance with the degree of necessity and the transmission cycles of program information are made shorter in the order of a day having a higher degree of necessity to a day having a lower degree of necessity.

Specifically, program information a of the day of reception whose degree of necessity is the highest for the viewer is inserted after program information for every three days, program information b of the next date which has the next highest degree of necessity is inserted after program information for every four days (the program information of the day of reception has priority over that of the next date), and program information of the third day to the seventh day are sequentially and properly transmitted between such transmissions.

This can therefore allow the viewer to frequently acquire program information of the day of reception according to the order of the highest-to-lowest degree of necessity, thereby significantly shortening the time to acquire the desired program information.

It is to be noted that the weighting of day-by-day program information and the setting of the transmission cycles are not limited to those mentioned above, but can be arbitrarily carried out by the headend.

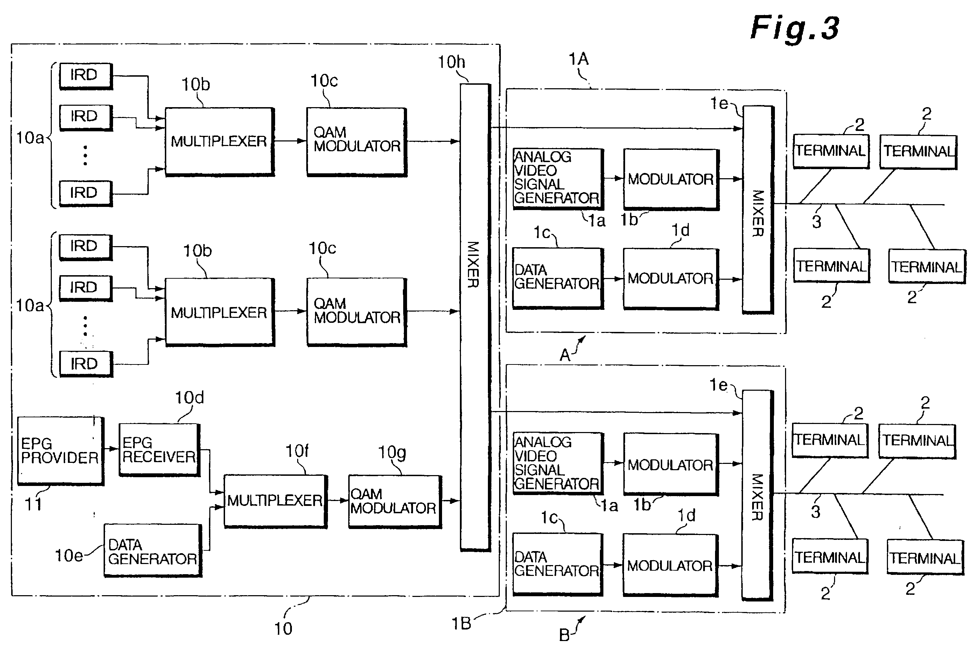

FIG. 3 shows the structures of analog headends 1A and 1B and a digital headend 10.

Referring to FIG. 3, the digital headend 10 has a predetermined number of digital video signal distributing systems each including a plurality of integrated receivers-decoders (IRDs) 10a, a multiplexer 10b and a QAM (Quadrature Amplitude Modulation) modulator 10c. The multiplexer 10b multiplexes digital video signals sent from those IRDs 10a, yielding a multiplexed signal. The QAM modulator 10c performs QAM modulation on this multiplexed signal. The digital headend 10 further includes an EPG receiver 10d, a data generator 10e, another multiplexer 10f, another QAM modulator 10g and a mixer 10h.

The following discusses the structure of a data signal including EPG information.

The EPG receiver 10d receives EPG information which is regularly or irregularly supplied from a cooperating EPG provider 11.

The data generator 10e generates other data such as view control information (conditional access, etc.).

The multiplexer 10f multiplexes the EPG information from the EPG receiver 10d and various kinds of data from the data generator 10e, yielding a multiplexed signal. The QAM modulator 10g performs QAM modulation on this multiplexed signal.

The digital video signals and data from the QAM modulators 10c and 10g are mixed by the mixer 10h. The resultant signal and data are transmitted to the analog headends 1A and 1B over separate channels.

It is to be noted that the digital video signals and data are multiplexed based on the MPEG-2 standards.

Each of the analog headends 1A and 1B comprises an analog video signal generator 1a, a modulator 1b, a data generator 1c, a modulator 1d and a mixer 1e. As the analog headends 1A and 1B have the same structure, only the structure of the analog headend 1A will be discussed below.

In the analog headend 1A in an area A, the analog video signal generator 1a outputs, for example, a local broadcasting signal which is in turn modulated by the modulator 1b. The data generator 1c generates data such as charge (billing) information, which is in turn subjected to analog modulation in the modulator 1d.

The analog video signal and the data from the modulator 1d and the analog video signal and the data from the digital headend 10 are mixed by the mixer 1e. The resultant signal and data are distributed to individual terminals 2.

As apparent from the above, a plurality of analog headends 1A and 1B which are provided area by area are connected to one digital headend 10, and the digital video signals and data sent from the digital headend 10 are transmitted to the analog headends 1A and 1B respectively located in the areas A and B. The digital video signals and data are then distributed together with analog signals to the individual terminals 2 connected to the analog headends 1A and 1B.

All EPG information including analog channels and digital channels are supplied from the EPG provider 11.

The digital headend 10 automatically receives the program information from the EPG provider 11 every day or irregularly and transmits the program information to the individual analog headends 1A and 1B.

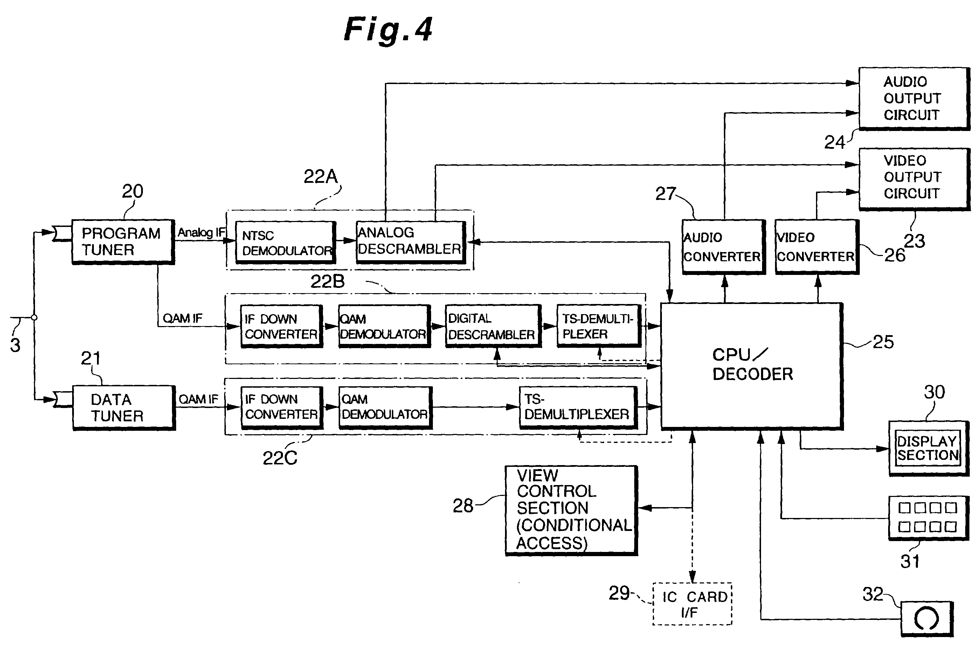

FIG. 4 is a block diagram showing the structure of each digital terminal for each area A or B which receives digital program video signals from the digital headend 10 in the above-described CATV view control system.

In FIG. 4, the analog video signals sent from the analog headend 1A or 1B and the digital video signals and data signals sent via the analog headend 1A or 1B from the digital headend 10 are distributed via a cable 3 to a program tuner 20 and a data tuner 21.

The analog video signals input to the program tuner 20 are processed by an analog video signal processor 22A. The processed video signals and audio signals are respectively sent to a video output circuit 23 and an audio output circuit 24.

The analog video signal processor 22A has a NTSC demodulator and an analog descrambler. The NTSC demodulator demodulates analog video IF signals of the NTSC system output from the program tuner 20. When the analog video signals sent from the analog headend 1A or 1B have been scrambled, the demodulated signals are descrambled by the analog descrambler and the descrambled signals are then input to a CPU/decoder 25 located at the subsequent stage.

The digital video signals are processed by a digital video signal processor 22B before being input to the CPU/decoder 25.

The digital video signal processor 22B includes an IF down converter, a QAM demodulator, a digital descrambler and a TS-demultiplexer. The IF down converter down-converts the QAM-modulated digital video IF signals and the resultant signals are then demodulated by the QAM demodulator.

When the digital video signals sent from the digital headend 10 have been scrambled, the demodulated signals are descrambled by the digital descrambler. The TS-demultiplexer demultiplexes a transport stream (TS) of the MPEG-2 standards and the demultiplexed transport stream is input to the CPU/decoder 25 at the subsequent stage.

The digital video signals and digital audio signals from the CPU/decoder 25 are respectively sent via a video converter 26 and an audio converter 27 to the video output circuit 23 and the audio output circuit 24.

The digital data signals such as an EPG input to the data tuner 21 are processed by a digital data signal processor 22C and then sent to the CPU/decoder 25. The CPU/decoder 25 sends the digital data signals to the video output circuit 23 and the audio output circuit 24 via the video converter 26 and the audio converter 27.

Like the digital video signal processor 22B, the digital data signal processor 22C includes an IF down converter for down-converting the digital data IF signals and a QAM demodulator for demodulating the down-converted signals. The digital data signal processor 22C further includes a TS-demultiplexer which demultiplexes various kinds of data, such as EPG data multiplexed into a transport stream according to the MPEG-2 standards. The demultiplexed data is then input to the CPU/decoder 25 at the subsequent stage.

Referring again to FIG. 4, the terminal further comprises a view control section 28, an ID card interface (I/F) 29, a display section 30 for displaying channels, etc., a key input section 31 and a remote control receiver 32.

With the above-described structure, the digital headend 10 cyclically transmits EPG information for one week as illustrated in FIG. 1 every day.

For example, the program information a of the day of reception whose degree of necessity is the highest for the viewer is inserted after program information for every three days, the program information b of the next date which has the next highest degree of necessity is inserted after program information for every four days (the program information of the day of reception has priority over that of the next date), and the program information of the third day to the seventh day are sequentially and properly transmitted between such transmissions.

The subscriber or viewer operates a remote controller or the key input section 31 of the terminal 2 to select a program of the desired date or the desired day of a week.

This selection is carried out, for example, by displaying the days in a week starting from the day of reception on the screen of a TV set (not shown) connected to the terminal 2 and selecting the desired day of the week from the displayed data by operating the remote controller or the key input section 31.

As the subscriber (viewer) selects the date or the day of a week which covers the EPG information the subscriber wants to watch, the CPU/decoder 25 compares the date or the day of a week with the EPG information sequentially sent from the digital headend 10 via the analog headend 1A or 1B every day. When the date or the day of a week set by the subscriber matches with the date or the day of a week of the transmitted EPG information, the CPU/decoder 25 fetches that EPG information and displays it on the screen of the TV set.

According to the above-described program information transmitting method, program information of the genre a viewer watches most may be cyclically inserted and transmitted between transmissions of the program information of the individual dates in a desirable predetermined cycle.

For instance, program information which is a collection of only sports programs is inserted and transmitted between day-by-day program information after program information for every two days or three days. This can allow each viewer to frequently acquire program information of the most desired genre.

The viewer may be allowed to select only the desired one of the genre-by-genre program information which is transmitted in a short cycle on the associated terminal so that this desired program information alone is input to the terminal. This can further shorten the time for the acquisition of the desired program information.

Further, the above-described program information transmitting system demonstrates its advantages most in the coming age where future digital CATV systems will provide a greater number of multi-channel broadcasting programs so that the amount of program information will increase vastly.

Although only one embodiment of the present invention has been described herein, it should be apparent to those skilled in the art that the present invention may be embodied in many other specific forms without departing from the spirit or scope of the invention. Therefore, the present examples and embodiment are to be considered as illustrative and not restrictive and the invention is not to be limited to the details given herein, but may be modified within the scope of the appended claims.

## Claims

1. A program information transmitting method for a CATV system for cyclically transmitting program information for predetermined days to terminals from a headend, comprising the steps of:
weighting said program information for said predetermined days day by day in accordance with a degree of necessity for a viewer; and
making a transmission cycle of program information having a high degree of necessity in said day-by-day weighted program information shorter than transmission cycles of those program information of the other days.

2. The program information transmitting method according to claim 1, wherein said transmission cycles of said day-by-day program information are shortened in an order of a day having a higher degree of necessity to a day having a lower degree of necessity.

3. The program information transmitting method according to claim 1, wherein of said transmission cycles of said day-by-day program information, said transmission cycle of program information of a day of reception is made shortest.

4. The program information transmitting method according to claim 1, wherein of said transmission cycles of said day-by-day program information, said transmission cycle of program information of the next day to a day of reception is made a second shortest to that of program information of said day of reception.

5. A program information transmitting method for a CATV system for transmitting program information for predetermined days to terminals from a headend, comprising the steps of:
inserting program information classified genre by genre between cyclically transmitted day-by-day program information in a shorter cycle than transmission cycles of said day-by-day program information.

6. A program information transmitting system for a CATV system for cyclically transmitting program information for predetermined days to terminals from a headend, comprising:
means for weighting said program information for said predetermined days day by day in accordance with a degree of necessity for a viewer; and
means for making a transmission cycle of program information having a high degree of necessity in said day-by-day weighted program information shorter than transmission cycles of those program information of the other days.

7. The program information transmitting system according to claim 6, wherein said transmission cycles of said day-by-day program information are shortened in an order of a day having a higher degree of necessity to a day having a lower degree of necessity.

8. The program information transmitting system according to claim 6, wherein of said transmission cycles of said day-by-day program information, said transmission cycle of program information of a day of reception is made shortest.

9. The program information transmitting system according to claim 6, wherein of said transmission cycles of said day-by-day program information, said transmission cycle of program information of the next day to a day of reception is made a second shortest to that of program information of said day of reception.

10. A program information transmitting system for a CATV system for transmitting program information for predetermined days to terminals from a headend, comprising:
means for inserting program information classified genre by genre between cyclically transmitted day-by-day program information in a shorter cycle than transmission cycles of said day-by-day program information.
